# DEMANDE DE BREVET EUROPEEN

(11) **EP 4 661 154 A1**
(43) Date de publication de la demande: **10.12.2025**
(21) Numéro de dépôt: 25174286.2
(22) Date de dépôt: 05.05.2025
(51) Int. Cl.: H01M 10/42, H01M 10/04

(54) **DISPOSITIF DE MESURE DE VARIATIONS DIMENSIONNELLES DE CELLULES ELECTROCHIMIQUES DE BATTERIES**

(30) Priorité: 03.06.2024 FR 2405780
(71) Demandeur: Stellantis Auto SAS, 78300 Poissy (FR)
(72) Inventeur: HEBIE, SEYDOU, 78955 CARRIERES SOUS POISSY (FR); TENE TESSE, ARMEL, 95800 CERGY (FR); GOUSSIAN, ALAIN, 78480 VERNEUIL SUR SEINE (FR); LASCOUX, HERVE, 95370 MONTIGNY LES CORMEILLES (FR)
(74) Mandataire: PSIP

(57) **Abrégé**

Dispositif de mesure des variations dimensionnelles de cellules électrochimiques de batterie lors de cycles de charge et de décharge, comportant suivant un axe principal (A) entre une plaque inférieure (2) et une plaque supérieure (4) d'une presse reliées rigidement, un empilage comprenant un plateau fixe (14) et un plateau mobile (12) de serrage entre eux d'une cellule en appliquant une force axiale, un capteur de cette force axiale (26), un capteur de déplacement axial du plateau mobile (12), et un vérin hydraulique (16) comprenant d'un côté d'un piston une première chambre délivrant une première force vers la cellule, et de l'autre côté une deuxième chambre, équipée d'un réservoir avec accumulateur de pression à gaz (66), délivrant une deuxième force de contrôle de pression qui est opposée à la première force pour donner au final la force axiale appliquée par le vérin (16).

## Description

0001. La présente invention concerne un dispositif de mesure de variations dimensionnelles de cellules électrochimiques de batteries lors de cycles de charge et de décharge, ainsi qu'un procédé de mise en œuvre d'un tel dispositif.

0002. Les cellules électrochimiques des batteries de stockage d'énergie électrique présentent des variations de volume lors des cycles de charge et de décharge. En particulier on constate un cycle, réversible ou non, de gonflement des matériaux de la cellule pendant la charge qui augmente les dimensions extérieures, et une contraction pendant la décharge avec un retour à l'état d'origine.

0003. Ces variations dimensionnelles dépendent de nombreux critères comme le type de matériaux utilisé, la température des cellules ou la force extérieure qui s'applique sur les surfaces. De plus les cellules peuvent présenter différentes formes extérieures, en particulier cylindriques, prismatiques, ou cellules de forme variée sans protection extérieure, appelée cellule poche, ou « pouch » en langue anglaise. Les cellules peuvent présenter aussi des contraintes variées de positionnement et de fixation à l'intérieur de l'enceinte contrôlée d'une batterie regroupant ces cellules. 0004. Des variations dimensionnelles des cellules non prévues peuvent poser des problèmes de contraintes élevées sur les matériaux intérieurs et sur l'enveloppe de la cellule, et d'endommagement causant des incidents de fonctionnement, voire des accidents comme un départ d'incendie. Une connaissance précise de ces variations est importante pour optimiser la conception des batteries, notamment pour les batteries de traction de véhicule automobile électrique ou hybride qui nécessitent une grande densité d'énergie pour une masse et un volume donné afin d'obtenir la meilleure autonomie du véhicule et un poids limité, avec un niveau de sécurité élevé. 0005. Un type de dispositif connu de mesure des variations dimensionnelles de cellules électrochimiques, présenté notamment par le document US-A1-20230296676, comporte une presse comprenant un espace de travail entre une plaque de base et une plaque supérieure reliées de manière rigide par des colonnes. La plaque de base reçoit un empilage comprenant successivement un capteur inférieur de force mesurant la force verticale s'appliquant sur l'empilage, un plateau de support d'une cellule, la cellule, et un plateau supérieur d'appui sur cette cellule. Un capteur de déplacement mesure le coulissement vertical du plateau supérieur d'appui.

0006. La plaque supérieure de la presse comporte des vis verticales de mise en pression d'un plateau de compression agissant par des ressorts de pression sur le plateau supérieur d'appui comprimant la cellule. Les vis de mise en pression permettent de définir la position du plateau de compression, qui fixe alors une hauteur disponible pour les ressorts comprimés pressant sur le plateau d'appui sur la cellule.

0007. Un vérin hydraulique venant au-dessus de la presse peut être utilisé pour appliquer une force sur le plateau de compression, comprimant les ressorts en dessous afin de permettre d'ajuster sans effort le vissage des vis de mise en pression.

0008. Dans tous les cas on obtient un positionnement fixe du plateau de compression, qui donne alors des variations de longueur des ressorts de pression en fonction du gonflement du volume de la cellule lors de sa charge ou de sa rétractation lors de sa décharge.

0009. On peut alors prévoir au départ un niveau minimum de pression appliquée par les ressorts sur une cellule déchargée, et étudier son gonflement lors de la charge électrique en mesurant à la fois la montée du plateau supérieur d'appui qui comprime les ressorts, et l'augmentation de la force verticale liée à cette compression des ressorts, donnée par le capteur inférieur de force.

0010. On peut aussi prévoir en variante au départ un niveau plus important de pression appliquée par les ressorts sur une cellule chargée, et étudier sa contraction lors de la décharge en mesurant à la fois la descente du plateau supérieur d'appui qui détend les ressorts, et la diminution de la force verticale.

0011. Dans tous les cas on ne peut réaliser certains types de mesures lors des cycles de charge et décharge, comme une mesure des variations dimensionnelles de la cellule sous une force variable prédéfinie, ou une mesure des variations de force pour une distance prédéfinie entre le plateau de support et le plateau supérieur d'appui.

0012. La présente invention a notamment pour but d'éviter ces problèmes de l'art antérieur.

0013. Elle propose à cet effet un dispositif de mesure des variations dimensionnelles de cellules électrochimiques de batterie lors de cycles de charge et de décharge, comportant suivant un axe principal entre une plaque inférieure et une plaque supérieure d'une presse reliées rigidement, un empilage comprenant un plateau fixe et un plateau mobile de serrage entre eux d'une cellule en appliquant une force axiale, un capteur de cette force axiale, et un capteur de déplacement axial du plateau mobile, ce dispositif étant remarquable en ce qu'il comporte un vérin hydraulique comprenant une tige reliée à un piston et au plateau mobile, ce vérin hydraulique comprenant d'un côté du piston une première chambre délivrant une première force vers la cellule, et de l'autre côté une deuxième chambre, équipée d'un réservoir avec accumulateur de pression à gaz, délivrant une deuxième force de contrôle de pression qui est opposée à la première force pour donner au final la force axiale appliquée par le vérin.

0014. Un avantage de ce dispositif est que l'accumulateur de pression à gaz permet en particulier de stabiliser avec une grande précision la pression hydraulique dans la chambre de contrôle de la force pour réaliser des mesures de gonflement de la cellule soumise à une force constante, ou de réguler finement cette force délivrée par la pression hydraulique liée à une pression du gaz facilement contrôlable avec précision.

0015. On peut notamment lors des cycles de charge mesurer les variations géométriques de la cellule en appliquant dessus une force maintenue à une valeur constante qui reste précise, ou mesurer la force appliquée sur la cellule disposée entre les deux plateaux qui sont maintenus avec un écart constant.

0016. Dans tous les cas la mesure simultanée du déplacement du plateau mobile, de la force axiale s'appliquant dessus, et la modulation précise de la pression appliquée par le vérin permet un grand nombre de types de mesures sur la cellule permettant d'optimiser sa conception, et celle de l'enceinte sécurisée de la batterie comprenant les fixations des cellules, en particulier pour réaliser une batterie de traction de véhicule automobile.

0017. Le dispositif de mesure selon l'invention peut comporter de plus une ou plusieurs des caractéristiques suivantes, qui peuvent être combinées entre elles.

0018. Avantageusement, la chambre d'application de la force comporte un deuxième réservoir avec accumulateur de pression à gaz de contrôle du volume de fluide de cette chambre.

0019. Avantageusement, les réservoirs avec accumulateurs comportent chacun une commande ajustable du volume de leur gaz.

0020. Avantageusement, les réservoirs avec accumulateurs comportent chacun une membrane en élastomère séparant le gaz du fluide du vérin hydraulique.

0021. Avantageusement, le dispositif de mesure comporte une vanne d'ajustement des volumes de fluide dans chacune des chambres du vérin. 0022. Avantageusement, le capteur de force est disposé au-dessus des plateaux et le vérin hydraulique en dessous de la plaque inférieure.

0023. L'invention a aussi pour objet un procédé de contrôle d'un dispositif de mesure comprenant l'une quelconque des caractéristiques précédentes, remarquable en ce que pour un test à force axiale constante sur la cellule il réalise en temps réel une comparaison de la pression dans la chambre d'application de la force avec une pression de consigne, pour l'ajuster en modifiant le volume de gaz du premier réservoir avec accumulateur.

0024. Avantageusement, le procédé réalise un test à force axiale nulle sur la cellule en équilibrant la première force donnée par la première chambre et la deuxième force donnée par la deuxième chambre.

0025. Avantageusement, la première chambre comportant un réservoir de contrôle de son volume de fluide avec accumulateur de pression à gaz, pour un test sous une force axiale constante, lors d'un gonflement de cette cellule donnant une augmentation de la force appliquée dessus, mesurée par le capteur de force, la quantité de gaz de ce réservoir de contrôle de volume est diminuée pour baisser le volume de fluide de la première chambre, et lors d'une contraction de la cellule cette quantité de gaz est augmentée.

0026. Avantageusement, le procédé réalise des mesures sur des cellules électrochimiques de batterie de traction de véhicule automobile.

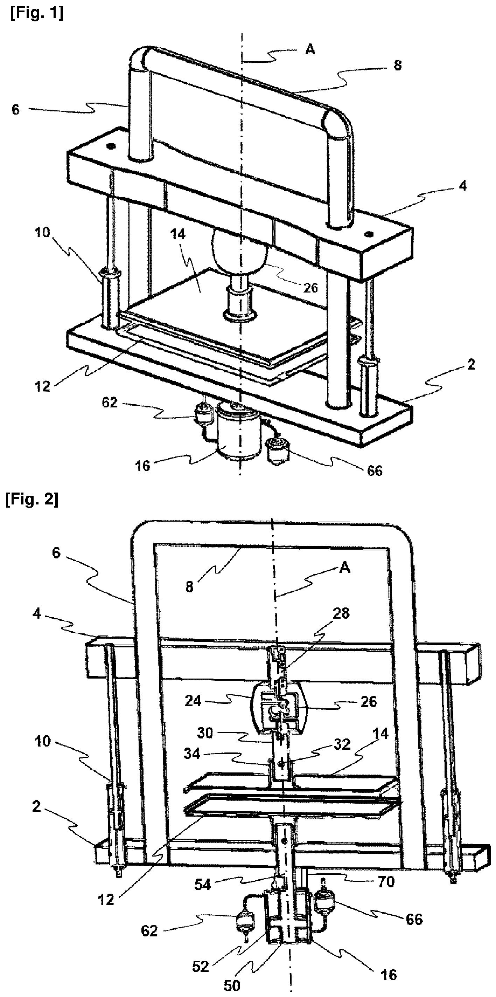

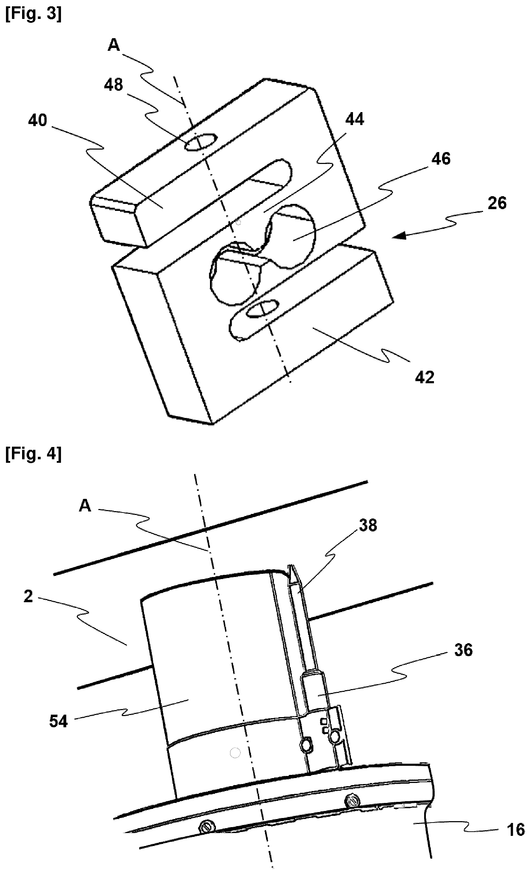

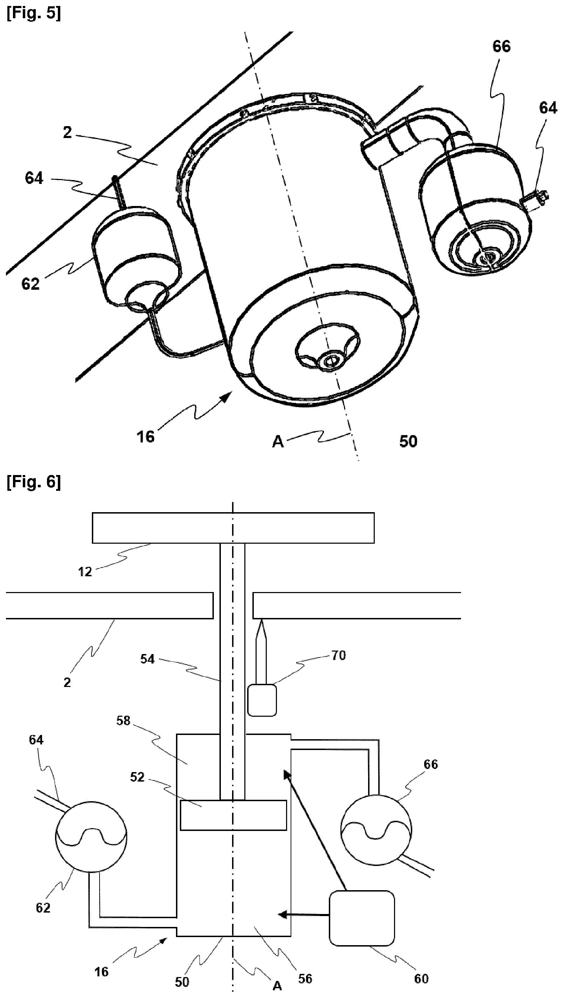

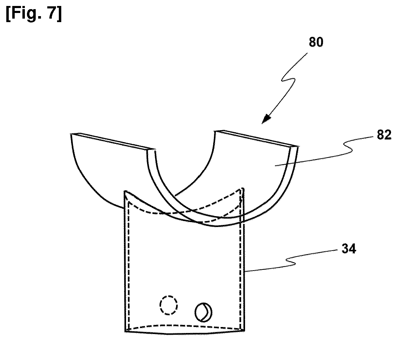

0027. L'invention sera mieux comprise et d'autres caractéristiques et avantages apparaîtront plus clairement à la lecture de la description ci-après donnée à titre d'exemple, en référence aux dessins annexés dans lesquels :
0028. [Fig. 1] présente un dispositif de mesure selon l'invention ;
0029. [Fig. 2] présente ce dispositif en coupe axiale ;
0030. [Fig. 3] présente le capteur de force de ce dispositif ;
0031. [Fig. 4] présente le capteur de déplacement du plateau inférieur de ce dispositif ;
0032. [Fig. 5] présente en vue de dessous le vérin de ce dispositif ;
0033. [Fig. 6] est un schéma de fonctionnement du vérin de ce dispositif ; et 0034. [Fig. 7] présente en variante un support pour cellule cylindrique remplaçant les plateaux.

0035. Dans l'ensemble du document la direction supérieure ou dessus est relative aux figures présentant la presse du dispositif de mesure, qui est disposée verticalement dans cet exemple.

0036. Les figures 1 et 2 présentent un dispositif de mesure comportant une presse verticale comprenant, disposées horizontalement, une plaque de base fixe 2 et une plaque supérieure 4, et comprenant deux tubes verticaux 6 traversant la plaque supérieure, présentant des extrémités inférieures fixés à la plaque de base, et supérieures reliées entre elles par un tube horizontal 8 au-dessus de cette plaque supérieure. Deux vérins latéraux 10 relient la plaque de base 2 à la plaque supérieure 4 pour soulever et ajuster la hauteur de cette plaque supérieure sans effort, qui est ensuite bridée de manière à former un cadre rigide comprenant ces deux plaques parallèles.

0037. Le dispositif de mesure comporte deux plateaux parallèles comprenant un plateau supérieur d'appui 14 suspendu sous la plaque supérieure 4 par un capteur de force axiale 26 protégé dans un capot, et un plateau inférieur de support 12 coulissant verticalement, relié par un vérin 16 disposé suivant l'axe vertical A à la plaque de base 2.

0038. La figure 3 présente le capteur de force axiale 26 comportant une forme usinée dans une plaque métallique d'épaisseur constant, comprenant un bras supérieur horizontal 40 et un bras inférieur horizontal 42 qui sont reliés entre eux par leurs extrémités opposées en passant par une partie centrale 44 de manière à former globalement un « S ». La partie centrale 44 comporte dans son milieu un perçage 46 comprenant deux parties circulaires qui se rejoignent.

0039. Chaque bras horizontal 40, 42 comporte un perçage axial 48 recevant une tige verticale de fixation 28, 30. La tige supérieure de fixation 28 est fixée à la plaque supérieure 4, et la tige inférieure 30 est emboîtée dans un manchon 34 formé sur le dessus du plateau supérieur 14, avec une goupille horizontale traversante 32 permettant un démontage rapide de cette liaison. 0040. Une jauge de contrainte fixée sur la partie centrale 44 du capteur de force 26, mesure les contraintes s'appliquant dans le métal lors d'une compression axiale entre les bras horizontaux 40, 42 transmise par les tiges de fixation 28, 30, représentant la force axiale de compression appliquée sur la cellule disposée entre les plateaux 12, 14.

0041. Le vérin 16 comporte un corps 50 fixé rigidement sous la plaque de base 2, contenant un piston 52 fixé à une tige de vérin 54 dont l'extrémité supérieure est emboîtée dans un manchon 34 formé sous le plateau inférieur 12 avec un maintien par une goupille horizontale 32. De cette manière les deux plateaux 12, 14 peuvent être changés rapidement par un retrait des goupilles horizontales 32 dégageant leurs manchons 34 de la tige de vérin 54 ou de la tige inférieure 30 du capteur de force axiale 26.

0042. Chaque plateau 12, 14 comporte sur la surface en regard de l'autre des formes permettant de recevoir une cellule électrochimique, par exemple cylindrique disposée verticalement ou horizontalement, ou tout autre forme prismatique, de manière à appliquer avec le vérin 16 une contrainte axiale verticale de compression sur cette cellule disposée entre eux.

0043. En variante on peut disposer entre les plateaux 12, 14 un empilage vertical de cellules permettant d'étudier sous contrainte les variations dimensionnelles de cet empilage qui pourra ensuite former un module de batterie.

0044. La figure 4 présente un capteur de déplacement 70 disposé verticalement, comportant un boîtier 36 fixé sur le côté de la tige de vérin 18 par un collier l'entourant, et un axe coulissant 38 disposant d'une pointe supérieure en appui sous la plaque de base 2, pour mesurer les déplacements verticaux du plateau inférieur 12 déplaçant avec la tige de vérin le boîtier par rapport à cette plaque de base.

0045. On obtient alors une mesure de la variation de distance entre les deux plateaux 12, 14, représentant suivant l'axe vertical A les variations de la dimension de la cellule qui est serrée entre ces plateaux.

0046. La presse est disposée dans une enceinte climatique permettant d'ajuster les conditions ambiantes de fonctionnement de la cellule, notamment la température et la composition du gaz interne. La presse peut comporter d'autres capteurs, notamment des capteurs de température de la cellule. En appliquant sur la cellule des cycles de charge et de décharge d'énergie électrique on étudie dans différentes conditions les relations entre la force axiale, la distance axiale entre les deux plateaux 12, 14, et d'autres paramètres comme la température de cette cellule.

0047. Les figures 5 et 6 présentent le vérin 16 comprenant l'extrémité inférieure de sa tige 54 liée à un piston 52 séparant une première chambre inférieure délivrant une force vers la cellule 56, reliée à un réservoir de contrôle de son volume 62, d'une deuxième chambre supérieure de contrôle de la force 58 reliée à un réservoir de contrôle de sa pression 66. Un système d'électrovannes 60 permet d'alimenter en fluide chaque chambre du vérin 56, 58.

0048. Le réservoir de contrôle du volume 62 et le réservoir de contrôle de pression 66 comportent chacun un accumulateur de pression à gaz comprenant une alimentation 64 de ce gaz avec une pression contrôlée, qui est séparé du fluide par une membrane en élastomère.

0049. Un dispositif de contrôle électronique surveille tous les paramètres de fonctionnement du dispositif de mesure, comprenant en particulier la mesure de la force axiale appliquée sur le capteur de force 26, la mesure du déplacement du plateau inférieur 12 donnée par le capteur de déplacement 70, le volume de fluide dans chaque chambre du vérin 56, 58, et la pression dans ces chambres qui est liée à la pression de gaz dans leur accumulateur de réservoir 62, 66.

0050. Le dispositif de contrôle surveille aussi les paramètres de fonctionnement de l'enceinte climatique pendant des cycles de charge et de décharge des cellules électrochimiques. L'enceinte climatique permet de plus de contrôler les gaz présents à l'intérieur, pour éviter en particulier un incendie lié à des gaz émis par la cellule qui se dégrade, ou des courts-circuits internes.

0051. Pendant un cycle de fonctionnement de la cellule lors d'un essai sous une force axiale constante, lors d'un gonflement de cette cellule qui donnerait une augmentation de la force appliquée dessus, mesurée par le capteur de force 26, le volume de gaz de l'accumulateur du réservoir de contrôle du volume 62 est diminué pour baisser le volume de fluide de la chambre inférieure délivrant une force vers la cellule 56, afin d'obtenir la force axiale de consigne. Lors de la contraction de la cellule à l'inverse le volume de gaz est augmenté pour ajouter un volume de fluide dans la chambre inférieure 56. De cette manière on évite des erreurs de mesure qui pourraient être entraînées par différents paramètres comme la variation de viscosité du fluide dans le circuit hydraulique.

0052. Le réservoir de contrôle de pression 66 permet de stabiliser en temps réel la force axiale résultante développée sur la tige du vérin 54, en ajustant le volume de gaz dans son accumulateur donnant une pression de contrôle de la deuxième chambre supérieure 58 délivrant une force de contrôle qui s'oppose à la force délivrée vers la cellule par la première chambre inférieure 56, afin d'obtenir au total la force axiale demandée sur cette tige de vérin qui est directement appliquée sur la cellule.

0053. En particulier pour un test à force axiale constante sur la cellule on réalise en temps réel une comparaison de la pression dans la chambre inférieure 56 avec une pression de consigne, pour l'ajuster en modifiant le volume de gaz de l'accumulateur du réservoir de contrôle de pression 66. On peut notamment appliquer sur la cellule une force nulle donnant un mode d'expansion de la cellule qui est libre.

0054. Pour un test avec un cycle de force axiale variable défini sur la cellule, on modifie en temps réel le volume de gaz de l'accumulateur du réservoir de contrôle de pression 66 afin d'obtenir cette force variable de consigne. On peut aussi réaliser des tests avec un écartement fixe entre les plateaux 12, 14, ou avec un écartement variable suivant un cycle prédéfini.

0055. La figure 7 présente un support pour cellule cylindrique 80 remplaçant les plateaux 12, 14, comprenant un berceau 82 formant un demi-cylindre ajusté sur la forme de la cellule, et au dos le manchon 34 qui s'emboîte sur la tige inférieure 30 ou la tige de vérin 54. En retirant les goupilles transversales 32 on démonte les plateaux 12, 14 pour les remplacer par deux supports de cellules cylindriques 80 afin de répartir la pression sur toute la surface de ces cellules.

0056. En variante on peut prévoir d'autres formes de berceaux 82 qui s'ajustent sur des contours particuliers de cellules.

0057. D'une manière générale le dispositif de mesure selon l'invention permet tout type de mesure comprenant des consignes de force axiale sur la cellule, ou de distance entre les deux plateaux 12, 14, qui sont contrôlées précisément en temps réel pendant les cycles de charge et de décharge. 0058. Le dispositif de mesure permet d'étudier tout type de cellules, comprenant en particulier des nouveaux matériaux de stockage d'énergie comme le silicium ou le lithium métal présentant des variations importantes de volume, pour optimiser l'enveloppe de ces cellules et leur installation dans la batterie afin d'atteindre les impératifs de sécurité, et d'obtenir une densité d'énergie élevée et un vieillissement optimal.

## Revendications

1. Dispositif de mesure des variations dimensionnelles de cellules électrochimiques de batterie lors de cycles de charge et de décharge, comportant suivant un axe principal (A) entre une plaque inférieure (2) et une plaque supérieure (4) d'une presse reliées rigidement, un empilage comprenant un plateau fixe (14) et un plateau mobile (12) de serrage entre eux d'une cellule en appliquant une force axiale, un capteur de cette force axiale (26), et un capteur de déplacement axial (70) du plateau mobile (12), **caractérisé en ce qu'**il comporte un vérin hydraulique (16) comprenant une tige (54) reliée à un piston (52) et au plateau mobile (12), ce vérin hydraulique (16) comprenant d'un côté du piston (52) une première chambre délivrant une première force vers la cellule (56), et de l'autre côté une deuxième chambre (58), équipée d'un réservoir avec accumulateur de pression à gaz (66), délivrant une deuxième force de contrôle de pression qui est opposée à la première force pour donner au final la force axiale appliquée par le vérin (16).

2. Dispositif de mesure selon la revendication 1, **caractérisé en ce que** la première chambre (56) comporte un réservoir avec accumulateur de pression à gaz (62) de contrôle du volume de fluide de cette première chambre (56).

3. Dispositif de mesure selon la revendication 2, **caractérisé en ce que** les réservoirs avec accumulateurs (62, 66) comportent chacun une commande ajustable du volume de leur gaz.

4. Dispositif de mesure selon la revendication 2 ou 3, **caractérisé en ce que** les réservoirs avec accumulateurs (62, 66) comportent chacun une membrane en élastomère séparant le gaz du fluide du vérin hydraulique (16).

5. Dispositif de mesure selon l'une quelconque des revendications précédentes, **caractérisé en ce qu'**il comporte une vanne (60) d'ajustement des volumes de fluide dans chacune des chambres du vérin (56, 58).

6. Dispositif de mesure selon l'une quelconque des revendications précédentes, **caractérisé en ce que** le capteur de force (26) est disposé au-dessus des plateaux (12, 14) et le vérin hydraulique (16) en dessous de la plaque inférieure (2).

7. Procédé de contrôle d'un dispositif de mesure selon l'une quelconque des revendications précédentes, **caractérisé en ce que** pour un test à force axiale constante sur la cellule il réalise en temps réel une comparaison de la pression dans la première chambre (56) avec une pression de consigne, pour l'ajuster en modifiant le volume de gaz du réservoir de contrôle de pression (66) de la deuxième chambre (58).

8. Procédé de contrôle selon la revendication 7, **caractérisé en ce qu'**il réalise un test à force axiale nulle sur la cellule en équilibrant la première force donnée par la première chambre (56) et la deuxième force donnée par la deuxième chambre (58).

9. Procédé de contrôle d'un dispositif de mesure selon l'une quelconque des revendications 1 à 6, la première chambre (56) comportant un réservoir de contrôle de son volume de fluide avec accumulateur de pression à gaz (62), **caractérisé en ce que**, pour un test sous une force axiale constante, lors d'un gonflement de cette cellule donnant une augmentation de la force appliquée dessus, mesurée par le capteur de force (26), la quantité de gaz de ce réservoir de contrôle de volume (62) est diminuée pour baisser le volume de fluide de la première chambre (56), et lors d'une contraction de la cellule cette quantité de gaz est augmentée.

10. Procédé de contrôle selon l'une quelconque des revendications 7 à 9, **caractérisé en ce qu'**il réalise des mesures sur des cellules électrochimiques de batterie de traction de véhicule automobile.
